# EUROPÄISCHE PATENTSCHRIFT

(11) **EP 3 463 745 B1**
(45) Veröffentlichungstag und Bekanntmachung des Hinweises auf die Patenterteilung: **26.02.2020**
(21) Anmeldenummer: 17727841.3
(22) Anmeldetag: 24.05.2017
(51) Int. Cl.: B23P 21/00, B25J 9/00, B23Q 7/04, B62D 65/02, B25J 21/00

(54) **FERTIGUNGSSTATION UND FERTIGUNGSVERFAHREN**
MANUFACTURING STATION AND MANUFACTURING PROCESS
STATION DE FABRICATION ET PROCÉDÉ DE FABRICATION

(30) Priorität: 24.05.2016 DE 202016102752 U
(43) Veröffentlichungstag der Anmeldung: 10.04.2019
(73) Patentinhaber: KUKA Systems GmbH, 86165 Augsburg (DE)
(72) Erfinder: THORWARTH, Paul, 86154 Augsburg (DE)
(74) Vertreter: Tillmann, Axel
(86) Internationale Anmeldenummer: PCT/EP2017/062624
(87) Internationale Veröffentlichungsnummer: WO 2017/202961

(56) Entgegenhaltungen:
- WO-A1-00/07870
- WO-A1-2015/132378
- DE-U1-202008 003 142
- DE-U1-202015 100 782

## Beschreibung

Die Erfindung betrifft eine Fertigungsstation und ein Fertigungsverfahren mit den Merkmalen im Oberbegriff des Verfahrens- und Vorrichtungshauptanspruchs.

Eine solche Fertigungsstation ist aus der WO 2015/132378 A1 bekannt. Sie weist zwei zellenartige Prozessbereiche mit jeweils einer Arbeitsstelle und einer Prozesseinrichtung sowie eine den jeweiligen Schutzbereich umschließende Schutzabtrennung mit einem gesicherten Zugang für den Werkstücktransport auf. Die Fertigungsstation umfasst ferner eine automatische Ladeeinrichtung mit Laderobotern, die dazu ausgebildet sind, Werkstücke auf und von einem Fördermittel außerhalb der Schutzabtrennung aufzuladen und abzuladen sowie die Werkstücke durch den gesicherten Zugang in und aus dem Prozessbereich zu transportieren.

Es ist Aufgabe der vorliegenden Erfindung eine verbesserte Fertigungstechnik aufzuzeigen.

Die Erfindung löst diese Aufgabe mit den Merkmalen im Verfahrens- und Vorrichtungshauptanspruch. Die beanspruchte Fertigungstechnik, d.h. die Fertigungsstation und das Fertigungsverfahren, haben verschiedene Vorteile. Die automatische und multifunktional ausgebildete Ladeeinrichtung bzw. deren Laderoboter sind zusammen mit einer Werkstückablage innerhalb der besagten Schutzabtrennung angeordnet. Die Werkstückablage befindet sich im Arbeitsbereich der Laderoboter, die hierauf jeweils bedarfsweise zugreifen können. Ein Laderoboter entlädt das Fördermittel und stellt die entladenen Werkstücke an der Werkstückablage bereit und führt an den entladenen Werkstücken einen Rüstvorgang durch.

Die beanspruchte Fertigungstechnik bietet besondere Vorteile hinsichtlich optimaler Ausnutzung der verfügbaren Zeiten, insbesondere Taktzeiten, und der Auslastung der eingesetzten Roboter sowie der kompakten und platzsparenden Ausbildung und Anordnung der Fertigungsstation. Die Lade-, Rüst- und Prozesszeiten können überschnitten werden.

In einer besonders günstigen Ausführungsform weist die Fertigungsstation einen einzelnen Prozessbereich mit zwei bevorzugt stationär angeordneten Laderobotern und einer zwischen den Laderobotern angeordneten Werkstückablage auf. Die Fertigungsstation kann alternativ mehrere Prozessbereiche aufweisen. Diese können miteinander prozesstechnisch und logistisch verkettet sein. Ferner ist eine Mehrfachanordnung von Laderobotern und Werkstückablagen möglich.

Eine Laderoboter ist als Rüstroboter ausgebildet und führt die Entladung des Fördermittels und die Bereitstellung der ein oder mehreren Werkstücke an der Werkstückablage aus. Zusätzliche führt der Laderoboter einen Rüstvorgang durch, der z.B. aus einer Kommissionierung der entladenen Werkstücke auf der Werkstückablage und/oder aus einer Vorbereitung der entladenen Werkstücke für den nachfolgenden und im Prozessbereich ausgeführten Prozess, insbesondere Fügeprozess. Ein solcher Rüstvorgang kann aus mehreren Einzelvorgängen oder Arbeitsinhalten bestehen. Beim Bereitstellen und Kommissionieren der Werkstücke kann auch ein Assemblieren und gegebenenfalls ein Vorfügen einzelner Werkstücke erfolgen.

Ein anderer Laderoboter ist als Präsentierroboter ausgebildet und gesteuert und dient zum Zuführen von bereitgestellten Werkstücken von der Werkstückablage zum Prozessbereich und gegebenenfalls auch nach erfolgtem Prozess zum Abführen der Werkstücke aus dem Prozessbereich und zum Beladen eines Fördermittels.

Die Schutzabtrennung weist einen für den gesicherten Einlass und/oder Auslass des Fördermittels ausgebildeten Zugang und einen Durchfahrtbereich innerhalb der Schutzabtrennung mit mehreren Haltestellen für das Fördermittel auf. Die Haltestellen können jeweils den Laderoboter zugeordnet sein. Sie können sich im Bereich der Werkstückablage befinden. An der einen Haltestelle erfolgen ein Entladen der mitgeführten ein oder mehreren Werkstücke vom Fördermittel und deren Bereitstellung an der Werkstückablage sowie der Rüstvorgang. An der anderen wird das gleiche oder ein anderes Fördermittel nach dem durchgeführten Prozess wieder mit den z.B. gefügten Werkstücken beladen.

Zwischen den Haltestellen zum Entladen und Beladen können sich eine oder mehrere weitere Haltestellen befinden. Diese können z.B. als Wartepositionen und/oder zu Pufferzwecken bzw. als Zwischenablage dienen. Dies ist insbesondere bei einer alternativen Fertigungsstation mit mehreren Prozessbereichen bzw. mehreren Arbeitsstellen von Vorteil.

Die Fertigungsstation kann typflexibel ausgebildet sein und eignet sich für die Durchführung von Prozessen unterschiedlicher Art an unterschiedlichen und typspezifischen Werkstücken, insbesondere Karosserieteilen. Hierdurch ist eine hochflexible Fertigung möglich. Die Laderoboter können wechselbare Werkzeuge, insbesondere Greifwerkzeuge, aufweisen und auf Werkzeugmagazine im Arbeitsbereich zugreifen. Die Prozesseinrichtung kann an der Arbeitsstelle eine feste oder wechselbare Werkstückaufnahme und ein oder mehrere Prozessroboter, insbesondere Fügeroboter, aufweisen. Für die vorgenannte typflexible Fertigung ist eine wechselbare und an den jeweiligen Werkstücktyp anpassbare Werkstückaufnahme von Vorteil. Sie kann z.B. durch einen weiteren Zugang in der Schutzabtrennung von Fördermitteln zugeführt und ausgetauscht werden.

Als Fördermittel eignen sich besonders Flurfördermittel. Dies können z.B. automatisierte fahrerlose Fahrzeuge, z.B. AGV oder FTS, sein, die programmgesteuert auf Förderwegen in beliebigen Richtungen verkehren können und dabei lenkbar sind und Kurven fahren können. Von besonderem Vorteil ist eine Ausbildung als multidirektional verfahrbare oder flächenbewegliche Fördermittel. Diese können aus dem Stand und in der Fahrt in beliebige Richtungen, insbesondere auch quer zu ihrer Längsachse, bewegt werden. Alternativ sind andere Arten von Fördermitteln, z.B. mit hängender Lage und Führung, möglich. Ein Fördermittel kann auch als bodenmontiertes oder aufgeständertes Friktionsrollensystem ausgebildet sein.

Eine Fertigungsanlage kann eine oder mehrere der genannten Fertigungsstationen aufweisen, in denen verschiedene Prozessschritte eines stationübergreifenden Fertigungsprozesses an den Werkstücken ausgeführt werden können. Die Fertigungsanlage kann außer den ein oder mehreren Fertigungsstationen eine Fördereinrichtung mit mehreren Fördermitteln und weitere Komponenten, z.B. ein Logistikzentrum für die Bereitstellung von Werkstücken, weitere und anders ausgebildete Fertigungsstationen etc. aufweisen. Für die hochflexible Fertigung ist es außerdem günstig, wenn die Fördermittel ein typspezifisches, kodiertes und vorzugsweise auch wechselbares Lastaufnahmemittel aufweisen, welches für die definierte Aufnahme von ein oder mehreren typspezifischen Werkstücken dient. Die Fördermittel können typneutral ausgebildet sein und werden jeweils mit dem benötigten typspezifischen Lastaufnahmemittel im besagten Logistikbereich ausgerüstet und anschließend mit typspezifischen Werkstücken beladen.

Günstig ist es außerdem, wenn die Fertigungsanlage bzw. die Fördereinrichtung einen Förderweg aufweist, der sich entlang einer Reihe von Fertigungsstationen erstreckt und der mehrere parallele Förderbahnen, insbesondere Fahrstreifen, für die Fördermittel aufweist. Die eine und unmittelbar an den Zugängen der Fertigungsstation vorbeiführende Förderbahn kann für die Zufahrt und Ausfahrt in und aus der jeweiligen Fertigungsstation benutzt werden. Die weitere Förderbahn kann für den Überholverkehr und für das Zurücklegen längerer Fahrtstrecken genutzt werden. Sie kann ebenfalls für die Zu- und Abfuhr von Werkstücken (4) zu und von den Bearbeitungsstationen (2) genutzt werden, um z.B. eine typflexible Fertigung zu ermöglichen. Dabei besteht eine Querungsmöglichkeit der Fördermittel (22) auf die Förderbahn (29) über die Förderbahnahn (28).

Die Zahl der Förderbahnen kann größer als zwei sein. Günstig ist ein Einbahnverkehr mit bevorzugt gleichen Fahrtrichtungsvorgaben auf den parallelen Förderbahnen. Alternativ kann bei entsprechender Ausbildung des Förderwegs auch ein Gegenverkehr eingerichtet werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: Eine schematische Draufsicht einer Fertigungsstation und
- Figur 2:: Eine schematische und ausschnittsweise Draufsicht auf eine Fertigungsanlage mit einer Reihe von Fertigungsstationen und einer Fördereinrichtung mit einem Förderweg.

Die Erfindung betrifft eine Fertigungsstation (2) und ein Fertigungsverfahren. Die Erfindung betrifft ferner eine Fertigungsanlage (1) mit einer oder mehreren dieser Fertigungsstationen (2) nebst zugehörigen Verfahren.

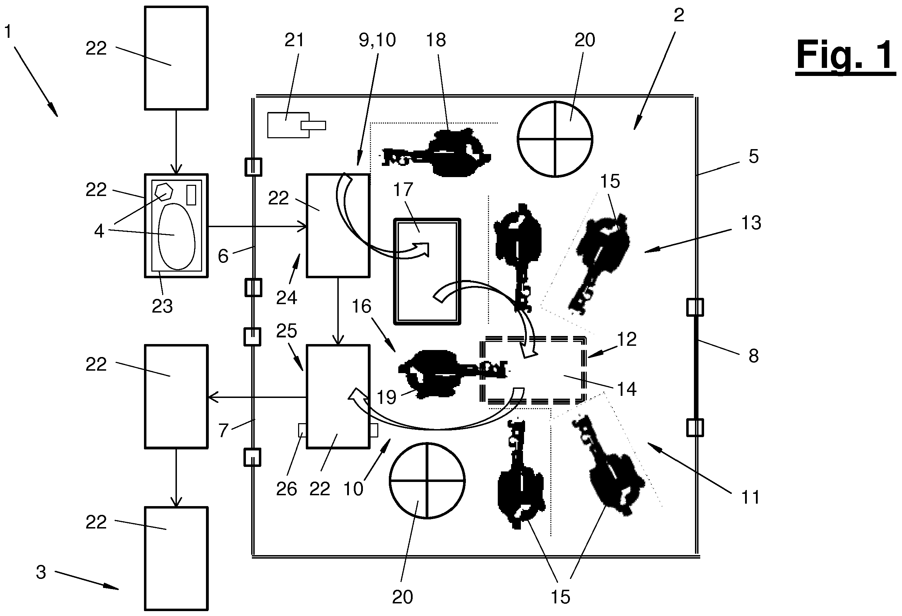

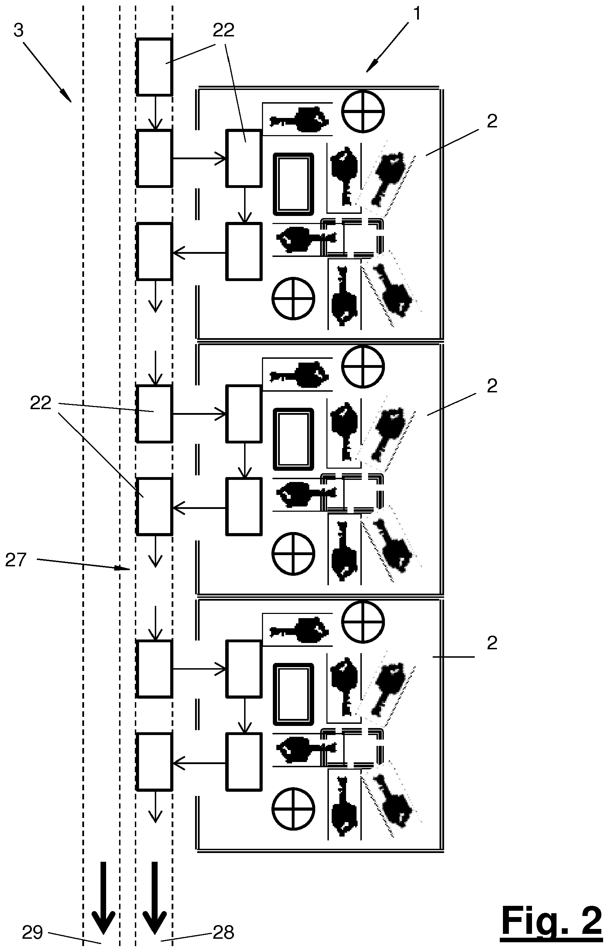

Figur 1 zeigt in einer schematischen Darstellung einer Fertigungsstation (2) in Draufsicht. In Figur 2 ist eine Fertigungsanlage (1) schematisch und abgebrochen dargestellt, die eine bevorzugt gerade Reihe von Fertigungsstationen (2) aufweist, die z.B. unmittelbar aneinander angrenzen. Zur Fertigungsanlage (1) können ferner eine Fördereinrichtung (3) mit mehreren Fördermitteln (22) und ein oder mehreren Förderwegen (27) für den Werkstücktransport sowie weitere Komponenten gehören. Eine nicht dargestellte Komponente kann z.B. ein Logistikbereich für die Zuführung und Bereitstellung sowie die Beladung der Fördermittel (22) mit Werkstücken (4) sein. Im Logistikbereich können auch die Fördermittel (22) bevorratet und gewartet werden.

Die Werkstücke (4) können von beliebiger Art und Größe sein. Vorzugsweise handelt es sich um Karosseriebauteile von Fahrzeug-Rohkarosserien. Die Werkstücke (4) können z.B. als Blechteile und/oder als Kunststoffteile oder Bauteile aus anderen Materialien ausgebildet sein. Die Werkstücke (4) können typspezifisch ausgebildet und für unterschiedliche Karosserietypen vorgesehen sein. Karosserietypen können sich z.B. in der Türenzahl und der Karosserieform (Limousine, Cabrio, Lieferwagen etc.) unterscheiden. Entsprechendes kann auch für andere Werkstückarten für andere Endgebilde außer Fahrzeugkarosserien gelten. In der Fertigungsanlage (1) können die Werkstücke (1) in einem oder mehreren Fertigungsschritten gefertigt werden, wobei in der einzelnen oder den mehreren Fertigungsstationen (2) jeweils ein Prozessschritt oder gegebenenfalls auch der Gesamtprozess ausgeführt wird.

Die Werkstücke (4) werden von den Transportmitteln (22) der jeweiligen Fertigungsstation (2) zugeführt und nach Durchführung des dortigen Prozesses wieder abtransportiert. Auf einem Fördermittel (22) können dabei ein oder mehrere Werkstücke (4) einzeln oder in Gruppen transportiert werden. Der Gesamtprozess bzw. die Prozessschritte können unterschiedlicher Art sein. Z.B. kann es sich um Fügeprozesse handeln. Nach einem solchen Fügeprozess wird an mehreren Werkstücken (4) z.B. aus der Fertigungsstation (2) eine gefügte Baugruppe abtransportiert. Unter den Begriff eines Werkstücks (4) wird auch eine solche Baugruppe verstanden.

Das oder die Werkstücke (4) können auf den Transportmitteln (22) in einer definierten Lage gehalten und gesichert werden. Hierfür kann auf den Fördermitteln (22) ein Lastaufnahmemittel (23) (abgekürzt LAM) fest oder wechselbar angeordnet sein. Das LAM (23) kann z.B. rahmen-oder skelettartig ausgebildet sein. Es kann ein oder mehrere Werkstücke (4) in vorgegebener exakter Lage nebeneinander und/oder übereinander aufnehmen. Es kann z.B. Positionerelemente und steuerbare Spannmittel aufweisen. Das LAM (23) kann dabei an typspezifische Werkstücke (4) adaptiert sein und eine entsprechende typspezifische Ausbildung haben. Das LAM kann ferner eine Codierung aufweisen und hierüber seinen Typ und die Art, Zahl und Anordnung der Werkstücke (4) sowie ggf. den Fertigungsstand signalisieren. Die Codierung kann in geeigneter Weise außerhalb oder in einer Fertigungsstation (2) ausgelesen werden. Sie kann ggf. auch nach erfolgtem Prozess mit prozessspezifischen Informationen beschrieben werden.

Die LAM (23) können in besagtem Logistikbereich bevorratet und verwaltet werden. Sie können hier auf gegebenenfalls neutrale Fördermittel (22) bedarfsweise montiert und gewechselt werden.

Die in Figur 1 gezeigte Fertigungsstation (2) weist einen Prozessbereich (11) mit einer Arbeitsstelle (12) und einer Prozesseinrichtung (13) auf. In der Fertigungsstation (2) ist vorzugsweise ein einzelner Prozessbereich (11) angeordnet. Hierdurch wird eine Fertigungszelle gebildet. In einer anderen und nicht dargestellten Ausführungsform kann die Fertigungsstation (2) mehrere Prozessbereiche (11) aufweisen und mehrzellig ausgebildet sein. Die Fertigungsstation (2) kann auch einen Prozessbereich (11) mit mehreren Arbeitsstellen (12) aufweisen.

An der Arbeitsstelle (12) kann sich eine Werkstückaufnahme (14) befinden. Diese kann als stationäre oder instationäre Aufnahme mit geeigneten Positionier- und Spannelementen für die definierte Aufnahme von ein oder mehreren Werkstücken (4) ausgebildet sein. Die Werkstückaufnahme (14) kann fest oder wechselbar ausgebildet sein. Sie kann eine typspezifische Ausbildung aufweisen. Die Werkzeugaufnahme (14) kann z.B. als typspezifische Spann- und Positioniervorrichtung ausgeführt sein, die als Ganzes gewechselt werden kann oder die auf einem stationären Sockel definiert und wechselbar angeordnet ist. Die Werkstückaufnahme (14) kann ggf. auch entfallen.

Die Prozesseinrichtung (13) kann mehrere Prozessgeräte (15) aufweisen, die den besagten Prozess an dem oder den Werkstücken (4) ausführen. Die Prozessgeräte (15) können z.B. als Prozessroboter, insbesondere Fügeroboter, ausgebildet sein. Sie können an einer oder mehreren Seiten der Arbeitsstelle (12) und der Werkstückaufname (14) angeordnet sein. Bei der alternativen Ausbildung mit mehreren Arbeitsstellen (12) ist die Anordnung der Prozessgeräte (15) entsprechend angepasst.

Der Prozessbereich (11) wird von einer Schutzabtrennung (5) umschlossen. Die Schutzabtrennung (5) ist z.B. als Zaun oder in anderer geeigneter Weise ausgebildet und sichert den inneren Stationsbereich, insbesondere den Prozessbereich (11), gegen unkontrollierten Zutritt von Personen oder Vorrichtungen. In der Schutzabtrennung (5) sind ein oder mehrere gesicherte Zugänge (6,7,8) angeordnet, die einen gesteuerten und gesicherten Zutritt in den geschützten Stationsinnenraum ermöglichen. Die Zugänge (6,7.8) können als überwachte und gesteuerte Schleusen, z.B. Rolltore oder dgl.. ausgebildet sein.

An einer Seite der Schutzabtrennung (5) sind ein oder mehrere gesicherte Zugänge (6,7) für den Werkstücktransport und für den Einlass und/oder Auslass eines Fördermittels (22) angeordnet. In der gezeigten Ausführungsform sind zwei getrennte und zum Förderweg (27) weisende Zugänge (6,7) angeordnet, wobei der Zugang (6) für den Einlass und der Zugang (7) für den Auslass eines Fördermittels (22) ausgebildet ist. Alternativ kann ein einzelner Zugang für Einlass und Auslass vorgesehen sein.

An anderer Stelle, z.B. an der Rückseite, der Schutzabtrennung (5) kann ein weiterer gesicherter Zugang (8) in Nachbarschaft zum Prozessbereich (11) angeordnet sein. Über den Zugang (8) kann die Werkstückaufnahme (14) bedarfsweise gewechselt werden. Der Zugang (8) kann ebenfalls für die Durchfahrt eines Fördermittels (22) ausgebildet sein.

Innerhalb der Fertigungsstation (2) und der Schutzabtrennung (5) ist ein Durchfahrtbereich (9) für ein Fördermittel (22) mit mehreren, insbesondere zwei, definierten Haltestellen (24,25) ausgebildet. Er ist an den oder die Zugänge (6,7) angeschlossen und verbindet die ggf. getrennten Zugänge (6,7). An der Haltestelle (24) erfolgt ein Abladen oder Entladen der ein oder mehreren Werkstücke (4) von einem Fördermittel (22) bzw. LAM (23). An der Haltestelle (25) erfolgt ein Beladen oder Aufladen des oder der Werkstücke (4) nach Durchführung des besagten Prozesses auf das gleiche oder ein anderes Fördermittel (22) bzw. LAM (23). Zwischen den besagten Haltestellen (24,25) zum Ent- und Beladen können eine oder mehrere weitere Haltestellen angeordnet sein.

An den Haltestellen (24,25) kann eine Positioniereinrichtung (26) angeordnet sein, die für eine exakte und vorgegebene Positionierung des jeweiligen Fördermittels (22) sorgt. Die Positioniereinrichtung (26) kann alternativ oder zusätzlich ein LAM (23) auf einem Fördermittel (22) und/oder die ein oder mehreren Werkstücke (4) auf einem Fördermittel (22) positionieren. Sie kann ggf. ein LAM (23) vom Fördermittel (22) abheben und positionieren. Die Positioniervorrichtung (26) kann auch eine Überwachung und Kontrolle der korrekten Werkstückposition sowie der vorgesehenen Zahl, Art und Größe der Werkstücke (4) aufweisen. Hierüber kann eine Prozessüberwachung und Stationsüberwachung realisiert werden.

Die Fertigungsstation (2) weist eine automatische Ladeeinrichtung (16) auf, die dazu ausgebildet ist, die ein oder mehreren Werkstücke (4) von einem Fördermittel (22) abzuladen und auf ein Fördermittel (22) aufzuladen. Die Ladeeinrichtung (16) dient ferner dazu, die Werkstücke (4) in den Prozessbereich (11) hinein und aus dem Prozessbereich (11) heraus zu transportieren. Außerdem kann die Ladeeinrichtung (16) für einen Transport von ein oder mehreren Werkstücken (4) innerhalb des Prozessbereiches (11), z.B. für Zusatzprozesse, genutzt werden.

Die Ladeeinrichtung (16) weist in der gezeigten Ausführungsform zwei Laderoboter (18,19) auf. Diese sind vorzugsweise stationär angeordnet. Zwischen den distanziert voneinander und vorzugsweise entlang des Durchfahrtbereichs (9) verteilt angeordneten Laderobotern (18,19) ist eine Werkstückablage (17) angeordnet. Sie befindet sich im Arbeitsbereich beider Laderoboter (18,19). Die Werkstückablage (17) kann stationär angeordnet sein. Sie kann tischartig ausgebildet sein.

Der Durchfahrtbereich (9) für ein Fördermittel (22) innerhalb der Fertigungsstation (2) ist Bestandteil eines Ladebereichs (10), in dem die Entlade- und Beladevorgänge von der Ladeeinrichtung (16) bzw. den Laderobotern (18,19) durchgeführt werden.

Der eine Laderoboter (18) dient zum Entladen und Bereitstellen von Werkstücken (4). Er kann auch einen Rüstvorgang ausführen. Der Laderoboter (18) ist als Rüstroboter ausgebildet und weist ein geeignetes festes oder wechselbares Werkzeug, z.B. ein Greifwerkzeug, auf. Er ist an der einen Haltestelle (24) angeordnet.

Das an der Haltestelle (24) befindliche Fördermittel (22) und dessen Werkstücke (4), die Werkstückablage (17) und ein Werkzeugmagazin (20) sowie eine Vorbereitungsvorrichtung (21) befinden sich im Arbeitsbereich des bevorzugt drehbaren Laderoboters (18). Der Laderoboter (18) ist zur Durchführung der folgenden Funktionen ausgebildet und gesteuert. Zum Einen lädt er das oder die Werkstücke (4) vom Fördermittel (22) ab und stellt sie auf der Werkstückablage (17) bereit. Er führt außerdem einen Rüstvorgang durch, der aus ein oder mehreren Schritten oder Arbeitsinhalten bestehen kann. Bei einem Rüstvorgang kann der Laderoboter (18) die entladenen Werkstücke (4) auf der Werkstückablage (17) in einer vorgegebenen Position und ggf. relativen Zuordnung kommissionieren. Das Kommissionieren kann auch ein Assemblieren von Werkstücken (4) beinhalten. Beim Kommissionieren kann z.B. auch ein Stapel von Werkstücken für den durchzuführenden Prozess bereitgestellt werden. Die Werkstückablage (17) kann geeignete Aufnahmemittel für eine definierte und positionsgenaue Aufnahme von ein oder mehreren Werkstücken (4) aufweisen.

Ein Rüstvorgang kann in einer Prozessvorbereitung von ein oder mehreren entladenen Werkstücken (4) für den nachfolgenden Prozess im Prozessbereich (11) bestehen. Eine solche Prozessvorbereitung kann z.B. einen Medienauftrag, insbesondere einen Klebstoffauftrag, auf ein oder mehrere Werkstücke (4) umfassen. Die Vorbereitungsvorrichtung (21) kann hierfür z.B. als Auftragvorrichtung ausgebildet sein. Ein anderer Vorbereitungsvorgang kann ein mechanischen Umformen oder sonstiges Bearbeiten eines Werkstückes (4) beinhalten, wobei der Laderoboter (18) hierfür ein geeignetes Werkzeug hat und/oder ein oder mehrere adaptierte Vorbereitungsvorrichtungen (21) im Roboterarbeitsbereich angeordnet sind.

Im Werkzeugmagazin (20) können unterschiedliche Roboterwerkezuge angeordnet sein, die sich z.B. in eine typspezifischen Ausbildung und/oder einer unterschiedlichen Bearbeitungs- oder Prozessfunktion unterscheiden.

Der zweite Laderoboter (19) ist als Präsentierroboter ausgebildet. Er ist an der zweiten Haltestelle (25) angeordnet. In seinem Arbeitsbereich befinden sich die Arbeitsstelle (12), die Werkstückablage (17), die zweite Haltestelle (25) und ggf. ein weiteres Werkzeugmagazin (20). Der bevorzugt drehbare Präsentierroboter (19) ist für die folgenden Funktionen ausgebildet und gesteuert. Er dient zur Aufnahme von bereitgestellten Werkstücken (4) von der Werkstückablage (17) und für deren Zuführung zum Prozessbereich (11) und ggf. zur positionsgenauen Abgabe an die dortige Werkstückaufnahme (14). Eine weitere Funktion ist das Abführen von Werkstücken (4) nach dem Prozess aus dem Prozessbereich (11) und das Aufladen dieser Werkstücke (4) auf ein an der zweiten Haltestelle (25) befindliches Fördermittel (22). Der Präsentierroboter (19) kann außerdem beim Prozess unterstützend tätig sein und dort Handlingaufgaben an den oder dem Werkstücken (4) ausführen. Er kann z.B. vorgefügte Werkstücke (4) von der Werkstückaufnahme (14) abheben und den Prozessrobotern (15) für die weitere Bearbeitung der Unterseite präsentieren.

Der Lade- bzw. Präsentierroboter (19) kann auch die Werkstücke (4) den Prozessrobotern (15) für die alleinige Bearbeitung präsentieren. Dadurch kann eine Aufnahmevorrichtung (14) entfallen.

Der Laderoboter bzw. Präsentierroboter (19) weist ebenfalls ein vorzugsweise wechselbares Roboterwerkzeug, insbesondere ein Greifwerkzeug. Der Laderoboter (19) kann auch ein Bearbeitungs- oder Prozesswerkzeug aufnehmen und am Prozess an der Arbeitsstelle (12) mitwirken.

Die Entlade- und Rüstvorgänge an der einen Haltestelle (24), der Prozess im Prozessbereich (11) und das Beladen eines Fördermittels (22) an der zweiten Haltestelle (25) können unabhängig voneinander erfolgen und zeitlich überschnitten werden. Während des Prozesses können neue Werkstücke (4) entladen, bereitgestellt und mit einem Rüstvorgang beaufschlagt werden. Das Abführen der Werkstücke (4) aus dem Prozessbereich (11) und das Beladen eines Fördermittels (22) durch den Laderoboter (19) können auf direktem Wege erfolgen. Der Laderoboter (19) kann dann auf dem Rückweg die bereitgestellten nächsten Werkstücke (4) von der Werkstückablage (17) mitnehmen und dem Prozessbereich (11) zuführen.

Die Haltestellen (24,25) sind räumlich getrennt und mit Distanz zueinander angeordnet. Das entladene Fördermittel (22) kann sich von der Haltestelle (24) zur Haltestelle (25) für die erneute Beladung bewegen. Das entladene Fördermittel (22) kann alternativ die Fertigungsstation (2) verlassen, wobei ein anderes Fördermittel (22) und ggf. ein anderes LAM (23) dann die Haltestelle (25) direkt anfährt, um die aus dem Prozess kommenden Werkstücke (4) aufzunehmen. Dies kann bei einem Fügeprozess sinnvoll sein, um eine gefügte Werkstückgruppe mit einer eigenen Geometrie exakt und gegebenenfalls typspezifisch aufnehmen zu können. An der Haltestelle (24) können die für den Prozess benötigten Werkstücke (4) von einem oder von mehreren Fördermitteln (22) zugeführt werden.

Die Lade- und Prozessroboter (14,18,19) sind vorzugsweise als programmierbare und mehrachsige Industrieroboter ausgebildet. Sie weisen z.B. vier, fünf, sechs oder mehr Roboterachsen auf. Sie können hierbei eine beliebige Kombination von rotatorischen und/oder translatorischen Roboterachsen haben. Vorzugsweise kommen Gelenkarmroboter oder Knickarmroboter mit rotatorischen Achsen zum Einsatz. Die Industrieroboter können am Abtriebselement mit einer Wechselkupplung und einer Medienkupplung für den automatischen Werkzeugwechsel und den jeweils benötigten Medienanschluss ausgerüstet sein. Die Lade- und Prozessroboter (14,18,19) können flurgebunden und stehend oder hängend, z.B. an einem Portal, angeordnet sein.

Die Fördermittel (22) sind vorzugsweise einzeln und unabhängig voneinander beweglich. Sie können in beliebig geeigneter Weise ausgebildet sein. Vorzugsweise handelt es sich um Flurfördermittel, die auf dem Anlagenboden auf den Förderwegen (27) verkehren. Die Fördermittel (22) können z.B. als automatisierte fahrerlose Fahrzeug, sog. AGV oder FTS, ausgebildet sein. Sie können sich programmgesteuert entlang der Förderwege (7) und in die Fertigungsstationen (2) hinein, durch den Durchfahrtsbereich (9) und wieder heraus bewegen. Die Fördermittel (22) können lenkbar sein und können Kurven fahren. Vorzugsweise sind sie multidirektional verfahrbar bzw. flächenbeweglich. Sie können z.B. mit Mecanum-Rädern ausgestattet sein, die ihnen eine Bewegung nach beliebigen Richtungen ermöglichen.

Gemäß Figur 2 erstreckt sich ein Förderweg (27) entlang der Reihe von Fertigungsstationen (2) und deren Zugängen (6,7). Ein solcher Förderweg (27), kann mehrere, z.B. zwei, parallele Förderbahnen (28,29) aufweisen. Diese können Fahrstreifen bilden, auf denen die Fördermittel (22) unabhängig voneinander verkehren können. Für die Förderbahnen (28,29) kann ein Einbahnverkehr mit gleicher Fahrtrichtungsvorgabe vorgesehen sein.

Die Anordnung von mehreren Förderbahnen ist vorteilhaft, um die aufgereihten Bearbeitungsstationen (2) wahlfrei zu erreichen. In der Fertigungsanlage (1) bzw. in mehreren Bearbeitungsstationen (2) können simultan mehrere unabhängige Produktionsprozesse ausgeführt werden, die mehr als nur eine Bearbeitungsstation (2) beanspruchen. Die Fertigungsanlage (1) und die Fertigungsstationen (2) sowie die Fördereinrichtung (3) weisen geeignete Steuermittel auf. Insbesondere kann eine Anlagensteuerung vorhanden sein, welche den Fertigungsablauf mit den ggf. mehreren Fertigungsschritten und die Bewegungen der hierfür benötigten Fördermittel (22) steuert. Die Steuerung kann einen Warehousemanager für die Steuerung des Werkstück- und Produktionsflusses sowie einen Flottenmanager für die Steuerung der Fördermittelbewegung aufweisen. Die Anlagensteuerung kann außerdem den Logistikbereich mit der Bereitstellung und Verwaltung der Fördermittel (22) und der LAM (23) beaufschlagen.

Die Zahl und Anordnung der Laderoboter (18,19) kann variieren und drei oder mehr betragen. Ein Laderoboter oder Rüstroboter (18) kann mehrere, z.B. zwei, Werkstückablagen (17) für mehrere Prozessbereiche (11) beaufschlagen. In einer Fertigungsstation (2) können mehrere Arbeitsstellen (12) vorhanden sein, die in einem oder in mehreren Prozessbereichen (11) angeordnet sind und an denen ein mehrstufiger Prozess oder mehrere eigenständige Prozesse durchgeführt werden. Die Werkstückablagen (17), Lade- und Prozessroboter (15,18,19) sind entsprechend in ihrer Zahl und Anordnung angepasst. Die mehreren Arbeitsstellen (12) können prozesstechnisch und logistisch verkettet sein, wobei z.B. Laderoboter (18,19) den Werkstücktransport übernehmen. Eine oder mehreren Arbeitsstellen (12) können außerdem an den Durchfahrtbereich (9) und evtl. dortige zusätzlich Haltestellen angeschlossen sein. Die dort befindlichen Fördermittel (22) und/oder LAM (23) können als Zwischenablage oder als Teilespeicher benutzt und mit dem Prozessfortschritt nachgeführt werden. An der ersten Haltestelle (24) kann eine Teilentladung eines mehrteiligen Werkstücks und an den weiteren Haltestellen Folgeentladungen stattfinden.

### BEZUGSZEICHENLISTE

- 1: Fertigungsanlage
- 2: Fertigungsstation, Fertigungszelle
- 3: Fördereinrichtung
- 4: Werkstück, Karosserieteil
- 5: Schutzabtrennung, Zaun
- 6: Zugang, Schleuse, Einfahrt
- 7: Zugang, Schleuse, Ausfahrt
- 8: Zugang, Schleuse, Rüstzugang
- 9: Durchfahrtbereich
- 10: Ladebereich
- 11: Prozessbereich
- 12: Prozessstelle, Arbeitsstelle
- 13: Prozesseinrichtung
- 14: Werkstückaufnahme, Aufnahmevorrichtung
- 15: Prozessroboter, Fügeroboter
- 16: Ladeeinrichtung
- 17: Werkstückablage, Bereitstellung, Kommissioniertisch
- 18: Laderoboter, Rüstroboter
- 19: Laderoboter, Präsentierroboter
- 20: Magazin, Werkzeugmagazin
- 21: Vorbereitungsvorrichtung, Auftragvorrichtung
- 22: Fördermittel, Fahrzeug, AGV, FTS
- 23: Lastaufnahmemittel, LAM
- 24: Haltestelle, Ladeposition
- 25: Haltestelle, Ladeposition
- 26: Positioniereinrichtung
- 27: Förderweg
- 28: Förderbahn, Fahrstreifen
- 29: Förderbahn, Fahrstreifen

## Patentansprüche

1. Fertigungsstation für Werkstücke (4), insbesondere Karosserieteile, wobei die Fertigungsstation (2) einen Prozessbereich (11) mit einer Arbeitsstelle (12) und einer Prozesseinrichtung (13) sowie eine den Prozessbereich (11) umschließende Schutzabtrennung (5), insbesondere einen Zaun, mit einem gesicherten Zugang (6,7,8) für den Werkstücktransport, und eine automatische Ladeeinrichtung (16) mit Laderobotern (18,19) aufweist, wobei die Ladeeinrichtung (16) dazu ausgebildet ist, Werkstücke (4) auf und von einem Fördermittel (22) aufzuladen und abzuladen sowie die Werkstücke (4) in und aus dem Prozessbereich (11) zu transportieren, **dadurch gekennzeichnet, dass** die automatische Ladeeinrichtung (16) multifunktional ausgebildet und zusammen mit einer Werkstückablage (17) innerhalb der Schutzabtrennung (5) angeordnet ist, wobei die Werkstückablage (17) im Arbeitsbereich der Laderoboter (18,19) angeordnet ist und ein Laderoboter (18) dort entladene Werkstücke (4) bereitstellt und einen Rüstvorgang durchführt.

2. Fertigungsstation nach Anspruch 1, **dadurch gekennzeichnet, dass** die Schutzabtrennung (5) einen für den gesicherten Einlass und/oder Auslass des Fördermittels (22) ausgebildeten Zugang (6,7) aufweist, wobei innerhalb der Schutzabtrennung (5) ein Durchfahrtbereich (9) mit mehreren Haltestellen (24,25) für das Fördermittel (22) angeordnet ist.

3. Fertigungsstation nach Anspruch 1 oder 2, **dadurch gekennzeichnet, dass** an den Haltestellen (24,25) eine Positioniereinrichtung (26) für das Fördermittel (22) angeordnet ist.

4. Fertigungsstation nach Anspruch 1, 2 oder 3, **dadurch gekennzeichnet, dass** an einer Seite der Schutzabtrennung (5) mehrere, insbesondere zwei, getrennte Zugänge (6,7) für den gesicherten Einlass und Auslass des Fördermittels (22) ausgebildet sind.

5. Fertigungsstation nach einem der vorhergehenden Ansprüche, **dadurch gekennzeichnet, dass** ein Laderoboter (18) dazu ausgebildet und gesteuert ist, bei einem Rüstvorgang mehrere vom Fördermittel (22) entladene Werkstücke (4) auf einer Werkstückablage (17) zu kommissionieren.

6. Fertigungsstation nach einem der vorhergehenden Ansprüche, **dadurch gekennzeichnet, dass** ein Laderoboter (18) dazu ausgebildet und gesteuert ist, bei einem Rüstvorgang an einem vom Fördermittel (22) entladenen Werkstück (4) eine Prozessvorbereitung, insbesondere einen Klebstoffauftrag, durchzuführen.

7. Fertigungsstation nach einem der vorhergehenden Ansprüche, **dadurch gekennzeichnet, dass** die bevorzugt typflexible Prozesseinrichtung (13) eine feste oder wechselbare Werkstückaufnahme (14) an einer Arbeitsstelle (12) und einen oder mehrere Prozessroboter (15), insbesondere Fügeroboter, aufweist.

8. Fertigungsstation nach einem der vorhergehenden Ansprüche, **dadurch gekennzeichnet, dass** die Fertigungsstation (2) eine einzelne Prozesseinrichtung (13) und zwei bevorzugt stationär und jeweils an einer Haltestelle (24,25) angeordnete Laderoboter (18,19) aufweist.

9. Fertigungsanlage für Werkstücke (4), insbesondere Karosserieteile, mit einer oder mehreren Fertigungsstationen (2) und einer Fördereinrichtung (3) mit mehreren Fördermitteln (22) für den Werkstücktransport, **dadurch gekennzeichnet, dass** die Fertigungsstation(en) (2) nach mindestens einem der Ansprüche 1 bis 8 ausgebildet ist/sind.

10. Fertigungsanlage nach Anspruch 9, **dadurch gekennzeichnet, dass** die Fördermittel (22) als Flurfördermittel, insbesondere als automatisierte fahrerlose Fahrzeuge (AGV oder FTS) ausgebildet sind.

11. Fertigungsanlage nach Anspruch 9 oder 10, **dadurch gekennzeichnet, dass** die Fördermittel (22) multidirektional verfahrbar bzw. flächenbeweglich sind.

12. Fertigungsanlage nach einem der Ansprüche 9 bis 11, **dadurch gekennzeichnet, dass** die Fördermittel (22) ein typspezifisches, codiertes und ggf. wechselbares Lastaufnahmemittel (23) für die definierte Aufnahme von einem oder mehreren Werkstücken (4) aufweist.

13. Verfahren zum Fertigen von Werkstücken (4), insbesondere Karosserieteilen, in einer Fertigungsstation (2), die einen Prozessbereich (11) mit einer Arbeitsstelle (12) und einer Prozesseinrichtung (13) sowie eine den Prozessbereich (11) umschließende Schutzabtrennung (5), insbesondere einen Zaun, mit einem gesicherten Zugang (6,7,8) für den Werkstücktransport, und eine automatische Ladeeinrichtung (16) mit Laderobotern (18,19) aufweist, wobei die Ladeeinrichtung (16) Werkstücke (4) auf und von einem Fördermittel (22) auflädt und ablädt sowie die Werkstücke (4) in und aus dem Prozessbereich (11) transportiert, **dadurch gekennzeichnet, dass** die automatische Ladeeinrichtung (16) multifunktional ausgebildet und zusammen mit einer Werkstückablage (17) innerhalb der Schutzabtrennung (5) angeordnet ist, wobei die Werkstückablage (17) im Arbeitsbereich der Laderoboter (18,19) angeordnet ist und ein Laderoboter (18) dort entladene Werkstücke (4) bereitstellt und einen Rüstvorgang durchführt.

14. Verfahren nach Anspruch 13, **dadurch gekennzeichnet, dass** die Fördermittel (22) durch getrennte Zugänge (6,7) in der Schutzabtrennung (5) in die Fertigungsstation (2) ein- und ausfahren und an einem stationsinternen Durchfahrtbereich (9) mit mehreren Haltestellen (24,25) zwischen den Zugängen (6,7) entlangfahren.

15. Verfahren nach Anspruch 13 oder 14, **dadurch gekennzeichnet, dass** ein Laderoboter (18) bei einem Rüstvorgang mehrere Werkstücke (4) von einem Fördermittel (22) entlädt und auf einer Werkstückablage (17) kommissioniert.

## Claims

1. Manufacturing station for workpieces (4), in particular body parts, with the manufacturing station (2) having a processing area (11) with a processing point (12) and a processing apparatus (13), as well as a security partition (5), in particular a fence, enclosing a processing area (11), with a secure access point (6, 7, 8) for workpiece transport, and an automatic loading apparatus (16) with loading robots (18, 19), with the loading apparatus (16) being designed to load and unload workpieces (4) onto and off a conveyor means (22) as well as to transport the workpieces (4) into and out of the processing area (11), **characterized in that** the automated loading apparatus (16) is designed to be multifunctional and is located within the security partition (5), along with the workpiece support (17), in the work area of the loading robots (18, 19) and that a loading robot (18) makes available workpieces (4) unloaded there and performs a setup process.

2. Manufacturing station according to claim 1, **characterized in that** the security partition (5) has an access point (6,7) designed for the secured inlet and/or outlet of the conveyor means (22), with a pass-through area (9) with several stops (24, 25) for the conveyor means (22) being disposed within the security partition (5).

3. Manufacturing station according to claims 1 or 2, **characterized in that** a positioning device (26) for the conveyor means (22) is disposed at the stops (24, 25).

4. Manufacturing station according to claims 1, 2 or 3, **characterized in that** several, in particular two, separate access points (6, 7) for the secured intake and outlet of the conveyor means (22) are located at one side of the security partition (5).

5. Manufacturing station according to one of the preceding claims, **characterized in that** a loading robot (18) is designed and controlled to select several workpieces (4) unloaded from the conveyor means (22) on a workpiece support (17).

6. Manufacturing station according to one of the preceding claims, ***characterized* in that** a loading robot (18) is designed and controlled to perform a process preparation, in particular to apply an adhesive, on a workpiece (4) that has been unloaded from a conveyor means (22) in a setup process.

7. Manufacturing station according to one of the preceding claims, **characterized in that** the preferably type-flexible processing apparatus (13) has a fixed or changeable workpiece mounting (14) and one or more processing robots (15), in particular assembly robots, at a working point (12).

8. Manufacturing station according to one of the preceding claims, **characterized in that** the manufacturing station (2) has a single processing apparatus (13) and two preferably stationary loading robots (18,19) respectively located at a stop (24,25).

9. Manufacturing station according to one of the preceding claims, **characterized in that** the manufacturing station (2) has a single processing apparatus (13) and two preferably stationary loading robots (18,19) respectively located at a stop (24,25)..

10. Manufacturing system according to claim 9, **characterized in that** the conveyor means (22) are designed as floor conveyor means, in particular as automated driverless vehicles (AGV or FTS).

11. Manufacturing system according to claim 9 or 10, **characterized in that** the conveyor means are (22) multi-directionally displaceable and/or movable on a flat surface

12. Manufacturing system according to one of the claims 9 to 11, **characterized in that** the conveyor means (22) have a type-specific, coded and if necessary changeable lifting attachment (23) for the defined mounting of one or more workpieces (4).

13. Method for manufacturing workpieces (4), in particular body parts, in a manufacturing station (2) having a processing area (11) with a working point (12) and a processing apparatus (13), as well as a security partition (5), in particular a fence, enclosing the processing area (11), with a secure access point (6,7,8) for workpiece transport, and an automatic loading apparatus (16) with loading robots (18, 19), with the loading apparatus (16) loading and unloading workpieces (4) onto and off a conveyor means (22), as well as transporting the workpieces (4) into and out of the processing area (11), **characterized in that** the automatic loading apparatus (16) is designed to be multi-functional and is located within the security partition (5) along with a workpiece support (17), with the workpiece support (17) being disposed in the work area of the loading robots (18, 19) and a loading robot (18) making available workpieces (4) unloaded there and performing a preparation process.

14. Method according to claim 13, **characterized in that** the conveyor means (22) move into and out of the manufacturing station (2) through separate access points (6, 7) in the security partition (5) and drive along a pass-through area (9) inside the station, with several stops (24, 25) between the access points (6, 7).

15. Method according to claim 13 or 14, **characterized in that**, in a preparation process, a loading robot (18) unloads several workpieces (4) from a conveyor means (22) and stacks them on a workpiece support (17).

## Revendications

1. Poste de fabrication de pieces à usiner (4), en particulier des pièces de carrosserie, dans lequel la station d'assemblage (2) une zone de traitement (11) ayant une position de travail entoure (12) et un dispositif de traitement (13), ainsi qu'une zone de traitement (11) enveloppe de protection (5), en particulier une clôture, un accès sécurisé (6,7,8) pour le transport des pièces, et une automatique des moyens de chargement comprenant (16) avec des robots de chargement (18,19), dans lequel les moyens de charge (16) est adapté pour les pièces à usiner (4), et chargement d'un transporteur (22) et décharger et les pièces (4) à transporter dans et hors de la zone de traitement (11), **caractérisé en ce que** les moyens de chargement automatique (16) est formée multi-fonctionnelle et, en même temps qu'un support de pièce (17) à l'intérieur de l'enveloppe de protection (5) est disposé, dans lequel le support de pièce (17) est disposé dans la zone de travail du robot de chargement (18,19) et un robot de chargement (18), déchargées pièces à usiner (4) la fourniture et l'exécution d'une opération de réglage.

2. Poste de fabrication selon la revendication 1, **caractérisé en ce que** la cloison de protection (5) présente une entrée et / ou une sortie sécurisées du moyen de transport (22) formé en accès (6,7), dans lequel à l'intérieur de la séparation de protection (5) une zone de passage (9) avec une pluralité de butées (24, 25) pour le transporteur (22) est disposé.

3. Poste de fabrication selon la revendication 1 ou 2, **caractérisé en ce qu'**un dispositif de positionnement (26) pour les moyens de transport (22) est agencé au niveau des butées (24, 25).

4. Station de fabrication selon la revendication 1, 2 ou 3, **caractérisée en ce que** sur un côté de la cloison de protection (5) sont formés plusieurs, en particulier deux accès séparés (6,7) pour l'entrée et la sortie sécurisées des moyens de transport (22).

5. Station de fabrication selon l'une des revendications précédentes, **caractérisée en ce qu'**un robot de chargement (18) est conçu et commandé pour prélever plusieurs pièces transportées (4) du convoyeur (22) sur un plateau de pièces à usiner (17) au cours d'un processus d'installation.

6. Station de fabrication selon l'une quelconque des revendications précédentes, **caractérisé en ce qu** ' un robot de chargement (18) est adaptée et réglée à un processus de mise en place à partir du convoyeur (22) la pièce à vide (4) une préparation de traitement, en particulier une application de colle à effectuer

7. Station de fabrication selon l'une des revendications précédentes, **caractérisée en ce que** le dispositif de traitement (13), de préférence flexible, comporte un support de pièce fixe ou échangeable (14) sur un poste de travail (12) et un ou plusieurs robots de traitement (15), en particulier des robots d'assemblage.

8. Station de fabrication selon l'une des revendications précédentes, **caractérisée en ce que** la station de fabrication (2) comporte un seul dispositif de traitement (13) et deux de préférence fixes et chacun à un arrêt (24,25) agencé d'un robot de chargement (18,19).

9. Installation de fabrication de pièces (4), en particulier de parties de corps, avec un ou plusieurs postes de fabrication (2) et un convoyeur (3) avec plusieurs moyens de transport (22) pour le transport de pièces, **caractérisée en ce que** le ou les postes de fabrication (2) au moins l'une des revendications 1 à 8 est / sont formées.

10. Installation de fabrication selon la revendication 9, **caractérisée en ce que** les moyens de transport (22) sont conçus en tant que convoyeurs au sol, en particulier en tant que véhicules automatisés sans conducteur (AGV ou FTS).

11. Installation de fabrication selon la revendication 9 ou 10, **caractérisée en ce que** les moyens de transport (22) sont mobiles dans la direction multidirectionnelle ou sont mobiles en surface.

12. Installation de fabrication selon l'une des revendications 9 à 11, **caractérisée en ce que** le moyen de transport (22) présente un moyen de réception de charge (23) spécifique au type, codé et éventuellement modifiable, pour l'enregistrement défini d'une ou de plusieurs pièces (4).

13. Procédé de fabrication de pièces (4), en particulier de parties de carrosserie, dans un poste de fabrication (2) comportant une zone de traitement (11) avec un poste de travail (12), un dispositif de traitement (13) et une enceinte de protection (11) entourant la zone de traitement (11). 5), en particulier une clôture, avec un accès sécurisé (6, 7, 8) pour le transport de pièces, et un dispositif de chargement automatique (16) avec des robots de chargement (18, 19), dans lequel le dispositif de chargement (16) des pièces (4) et depuis un convoyeur (22) charge et décharge et transporte les pièces (4) dans et hors de la zone de traitement (11), **caractérisé en ce que** le dispositif de chargement automatique (16) est multifonctionnel et formé avec un plateau de pièces (17) dans la séparation de protection (5)), dans lequel le repose-pièce (17) est disposé dans la zone de travail des robots de chargement (18, 19) et un robot de chargement (18) fournit des pièces (4) qui y sont déchargées et une opération de réglage exécute.

14. Procédé selon la revendication 13, **caractérisé en ce que** les moyens de transport (22) sont séparés par des accès séparés (6,7) dans la séparation de protection (5) du poste de fabrication (2) et dans une zone de passage interne du poste (9) plusieurs arrêts (24,25) entre les entrées (6,7) le long de.

15. Procédé selon la revendication 13 ou 14, **caractérisé en ce qu** 'un robot de chargement (18) lors du processus de mise en place de plusieurs pièces (4) d'un convoyeur (22) décharge et prend un plateau de pièces (17).
